# EUROPÄISCHE PATENTANMELDUNG

(11) **EP 1 868 109 A1**
(43) Veröffentlichungstag der Anmeldung: **19.12.2007**
(21) Anmeldenummer: 06012059.9
(22) Anmeldetag: 12.06.2006
(51) Int. Cl.: G06F 13/42

(54) **Ereignissignalisierung zwischen Peripheriemodulen und einer Verarbeitungseinheit**

(71) Anmelder: SIEMENS AKTIENGESELLSCHAFT, 80333 München (DE)
(72) Erfinder: Maul, Jürgen, 92237 Sulzbach-Rosenberg (DE); Tretter, Albert, 92712 Pirk (DE); Zenger, Hermann, 92533 Wernberg-Köblitz (DE); Ziemann, Wolfgang, 85635 Höhenkirchen-Siegertsbrunn (DE)

(57) **Zusammenfassung**

Die Erfindung betrifft ein Verfahren, ein Busprotokoll, ein Peripheriemodul, eine Verarbeitungseinheit, einen Hub sowie ein System aus den genannten Komponenten zur Ereignissignalisierung zwischen zumindest einem Peripheriemodul und einer Verarbeitungseinheit mittels eines Systembusses. Hierbei werden die zu übertragenen Daten in einen größeren Zeichenraum kodiert, aus dem ein Standard-Idle-Zeichen in Telegrammpausen zur Synchronisierung einer Verbindung zwischen Sender und Empfänger verwendet wird. Der Erfindung liegt die Aufgabe zugrunde, eine bei den Peripheriemodulen vorliegende Meldung unabhängig vom Telegrammverkehr, der durch die Verarbeitungseinheit initiiert wird, an die Verarbeitungseinheit signalisieren zu können. Diese Aufgabe wird dadurch gelöst, dass ein Peripheriemodul, das der Verarbeitungseinheit ein Ereignis signalisieren möchte, an die Verarbeitungseinheit in einer Telegrammpause anstelle des Standard-Idle-Zeichens eine Signalisierungssequenz sendet, die aus einem Alarm-Idle-Zeichen und einem Alarm-Identifier besteht, der Informationen über das betreffende Ereignis sowie die Modul-Adresse des Peripheriemoduls, auf dem das Ereignis vorliegt, enthält, wobei die Informationen über das Ereignis ebenfalls in den größeren Zeichenraum umkodiert werden.

## Beschreibung

Die Erfindung betrifft ein Verfahren zur Ereignissignalisierung zwischen zumindest einem Peripheriemodul und einer Verarbeitungseinheit mittels eines Systembusses, wobei der Systembus von einem Systembus-Master betrieben wird, der von den Peripheriemodulen Daten lesen oder an diese senden kann, wobei sich die Daten aus einzelnen Zeichen zusammensetzen, die zur Übertragung in einer Bitübertragungsschicht bei einem Sender durch einen Kodierer in einen größeren Zeichenraum umkodiert und bei einem Empfänger durch einen Dekodierer wieder zurückgewandelt werden, wobei für die Datenübertragung ein Telegrammverfahren nach dem Request/Response-Paradigma verwendet wird, bei dem bestimmte Zeichen aus dem größeren Zeichenraum zur Kennzeichnung von Start und Ende eines Telegramms und ein Standard-Idle-Zeichen in Telegrammpausen zur Synchronisierung einer Verbindung zwischen dem Sender und dem Empfänger verwendet werden.

Die Erfindung betrifft ferner ein Busprotokoll, das auf dem genannten Verfahren basiert, sowie ein Peripheriemodul, eine Verarbeitungseinheit und einen Hub zur Ereignissignalisierung nach dem genannten Verfahren. Schließlich betrifft die Erfindung ein System aus den genannten Komponenten, in dem das genannte Verfahren unter Verwendung des genannten Busprotokolls Anwendung findet.

Ein derartiges Verfahren bzw. ein derartiges System mit den genannten Komponenten unter Verwendung des genannten Busprotokolls kommt in allen Bereichen zum Einsatz, in denen Peripheriemodule mit einer Verarbeitungseinheit über einen Systembus kommunizieren, wie dies insbesondere in der Automatisierungstechnik der Fall ist. Dabei bestehen folgende Hauptanforderungen: Auf die Peripheriemodule muss vom Systembus-Master per Direktzugriff möglichst schnell und mit geringer Latenzzeit zugegriffen werden können, die Peripheriemodule sollen möglichst schnell anstehende Alarme bzw. anstehende Kommunikationsanforderungen an den Systembus-Master melden können und die Kommunikationsanbindung der Peripheriemodule muss kostengünstig realisierbar sein. Als Systembus-Master fungiert dabei entweder die (zentrale) Verarbeitungseinheit (CPU), die die Daten der Peripheriemodule bearbeitet, oder ein Interface-Modul, welches über einen Feldbus dezentral die Kopplung zwischen den Peripheriemodulen und der zentralen Verarbeitungseinheit herstellt. Die Peripheriemodule sind die Ein- und Ausgabemodule, die von dem Systembus-Master die Daten erhalten oder von denen der Systembus-Master Daten lesen kann. In der Automatisierungstechnik stellen die Peripheriemodule die Verbindung zum Automatisierungsprozess her. Weiterhin ist beispielsweise bei einer Verschaltung der Komponenten nach einem Backplane-Aufbau der Einsatz eines Hubs möglich, der sich bezüglich der Ereignissignalisierung wie ein Peripheriemodul verhält.

Unabhängig von der Verschaltung folgt der Kommunikationsablauf auf dem Systembus der bekannten Vorgehensweise: Durch einen Scheduler im Systembus-Interface des Systembus-Masters werden die anstehenden Aufträge priorisiert und über den Systembus an die Peripheriemodule versendet. Die Peripheriemodule dürfen nur dann Daten auf den Bus senden, wenn sie eine Aufforderung von der CPU erhalten haben, d.h. der Systembus-Master spricht ein Peripheriemodul durch einen Request an und erwartet eine entsprechende Response. Aufgrund von Prozessoder Diagnoseereignissen müssen die Peripheriemodule aber auch von sich aus eine Meldung an die CPU absetzen können, die möglichst schnell zur CPU transportiert und dort verarbeitet werden muss. Da auf einem Systembus eine große Anzahl von Peripheriemodulen (typischerweise bis zu 64) gesteckt sein können, muss durch einen speziellen Mechanismus der Transport der Meldungen zur CPU geregelt werden, da im schlimmsten Fall alle Peripheriemodule gleichzeitig eine Meldung an die CPU absetzen wollen. Prinzipiell kann der Buszugriff der einzelnen Busteilnehmer/Stationen, falls sie eine Nachricht versenden wollen, auf unterschiedliche Art und Weise festgelegt werden.

Bei Profibus z.B. gibt es einen Token, der zwischen den Master-Stationen ausgetauscht wird. Nur die Station, die den Token hat, darf auf den Bus eine Nachricht senden. Alle anderen Stationen sind passiv. Dies bedeutet, dass Stationen, also die genannten Peripheriemodule, nur dann eine Nachricht an die CPU senden dürfen, falls sie den Token haben. Dies führt dazu, dass die Reaktionszeit durch den Umlauf des Tokens bestimmt wird. Das Tokenverfahren (Tokenring, -bus) arbeitet aktuell bis zu Baudraten von 100 MBit/s. Es ist kein System bekannt, das mit höheren Baudraten arbeitet.

Profibus unterstützt auch ein Polling-Verfahren, bei dem der Master alle Slaves, also die genannten Peripheriemodule, abpollt und die Daten aus den Peripheriemodulen liest oder in die Peripheriemodule schreibt. Auch in diesem Fall hängt die Reaktions- bzw. Meldezeit vom Poll-Zyklus der CPU ab, bis ein Modul der CPU signalisieren kann, dass eine Alarm- oder eine Kommunikationsanforderung vorliegt.

Bei Ethernet haben sich bei 100 MBit/s die geswitchten Netze durchgesetzt. Der Durchsatz und die Reaktionszeit hängt dabei in starkem Maße von dem verfügbaren Telegrammspeicher in den einzelnen Switches und der Anordnung (Topologie) der Switches und der Teilnehmer ab. Jeder Teilnehmer darf zu jedem Zeitpunkt senden. Es gibt allerdings keine Garantie, wann die Nachricht beim Empfänger, der CPU im Falle einer Ereignissignalisierung, ankommt. Dies hängt von dem restlichen Telegrammaufkommen ab. Kommt es zu einer Kollision, da zwei Teilnehmer gleichzeitig senden, wird diese Kollision durch den Speicher im Switch aufgelöst. Die etwas später eintreffende Nachricht wird im Switch zwischengespeichert und nach dem Abschluss der ersten Nachricht versendet. Mittlerweile gibt es auch Systeme (z.B. PROFINET), die durch eine Planung die Kollision bei Ethernet verhindern, dies führt aber wieder dazu, dass die Teilnehmer ihre spontanen Kommunikationsanforderungen, wie z.B. Alarme, nur zu bestimmten Zeiten versenden dürfen. Ethernet bietet Baudraten von 10, 100 und 1000 MBit/s und darüber an.

Es gibt auch noch Systeme (CAN-basierte Lösungen), bei denen der Buszugriff und die Telegrammübertragung durch eine reine Prioritätssteuerung geregelt werden. Jedes Telegramm enthält ein Prio-Feld, das die Nachrichten eindeutig priorisiert. Die Buszugriffslogik wertet dieses Feld aus und lässt die Nachricht mit der höchsten Priorität passieren. Diese Art der Nachrichtenübermittlung ist bei Baudraten bis etwa 10 MBit/s machbar, darüber ist kein System bekannt, das mit einer derartigen Lösung arbeitet.

Bei vielen Automatisierungssystemen wird für den Meldeweg von den Peripheriemodulen zur CPU eine zusätzliche Hardware-Leitung vorgesehen. Hier musste der Systembus-Master bei aktiver Leitung den Status aus den Peripheriemodulen auslesen und ermitteln, welche Baugruppe eine Meldung an die CPU absetzen möchte, worauf die CPU dann die Meldung aktiv aus dem Peripheriemodul auslesen konnte. Dies hatte eine hohe Latenzzeit zur Folge, da die CPU nicht sofort wusste, auf welchem Peripheriemodul welche Meldung vorliegt.

Da die CPU nicht wissen kann, welche Baugruppe zu welchem Zeitpunkt eine Meldung an die CPU senden möchte, ist eine Lösung erforderlich, bei der unabhängig von der Telegrammbearbeitung durch die CPU eine Meldung von den Peripheriemodulen an die Verarbeitungseinheit übermittelt werden kann. Des Weiteren sollte der Systembus mit Baudraten von mehreren hundert MBit/s arbeiten können. Als ein der Erfindung zugrunde liegendes Verfahren bzw. System ist daher ein Telegrammverfahren nach dem Request/Response-Paradigma geeignet, bei dem die Daten, die sich aus einzelnen Zeichen zusammensetzen, zur Übertragung in einer Bitübertragungsschicht bei einem Sender durch einen Kodierer in einen größeren Zeichenraum umkodiert und bei einem Empfänger durch einen Dekodierer wieder zurückgewandelt werden und bestimmte Zeichen aus dem größeren Zeichenraum zur Kennzeichnung von Start und Ende eines Telegramms und ein Standard-Idle-Zeichen in Telegrammpausen zur Synchronisierung einer Verbindung zwischen dem Sender und dem Empfänger verwendet werden.

Aus der US 4 486 739 A1 ist beispielsweise eine 8B/10B-Kodierung bekannt, die auch bei Gigabit-Ethernet zum Einsatz kommt. Dies bedeutet, dass die 8-Bit-Zeichen des Protokoll-Layers beim Sender durch einen Kodierer in 10-Bit-Zeichen umgewandelt werden, die dann über die Leitungen übertragen werden. Beim Empfänger werden die 10-Bit-Zeichen durch einen Dekodierer wieder in 8-Bit-Zeichen umgewandelt. Dabei weisen die 10-Bit-Zeichen mindestens vier Pegelwechsel auf, wodurch Gleichstromfreiheit gewährleistet wird und Taktinformation zur Synchronisation der Übertragungsstationen aus dem Datenstrom gewonnen werden kann.

Auf der 8-Bit-Ebene sind maximal 256 Zeichen möglich, die durch die Umsetzung auf die 10 Bit auf 1024 Zeichen verteilt werden können. Die verwendeten Kodierungsregeln legen fest, dass die 256 Zeichen auf zwei disjunkte Zeichenräume im 10-Bit-Zeichenraum aufgeteilt werden, was 512 10-Bit-Zeichen belegt. Somit bleiben 512 Zeichen übrig, die nicht als Datenzeichen genutzt werden. Aus diesem zusätzlichen Zeichenvorrat ragen bestimmte Zeichen aufgrund ihres "Sicherheitsabstandes" zu anderen Zeichen heraus. Diese Zeichen werden dazu verwendet, um den Start und das Ende eines Telegramms zu kennzeichnen und in den Telegrammpausen die Verbindung zwischen dem Sendeport und dem Empfangsport synchronisiert zu halten. Unter diesen speziellen Zeichen gibt es eine weitere Klasse von Zeichen - auch Komma-Zeichen genannt -, die selbst bei jeder beliebigen Kombination aus diesen Zeichen und allen anderen Zeichen keine Kommas über Zeichengrenzen hinweg erzeugen. Diese Zeichen eignen sich deshalb hervorragend, um die Zeichengrenzen innerhalb des Datenstroms zu ermitteln. In dieser 8B/10B-Kodierung gibt es drei solcher Komma-Zeichen. Eines davon, das Standard-Idle-Zeichen, wird in den Telegrammpausen zwischen den Ports zweier Baugruppen übertragen. Damit ist die Übertragungsstrecke auch in den Telegrammpausen synchronisiert. Dies gilt für die Richtung von der CPU zu den Peripheriemodulen als auch für die Richtung von den Peripheriemodulen zur CPU.

Diese 8B/10B-Kodierung ist eigentlich eine kombinierte 5B/6Bund 3B/4B-Kodierung. Die Gleichstromfreiheit und integrierte Synchronisation erkauft man sich jedoch mit einem 25% höheren Bedarf an Bandbreite. Mit der 64B/66B-Kodierung existiert eine Weiterentwicklung dieses Verfahrens, bei dem nur noch ca. 3% Bandbreite mehr benötigt wird.

Der Erfindung liegt die Aufgabe zugrunde, ein Verfahren anzugeben, mit dem die Peripheriemodule unabhängig von dem Telegrammverkehr, der durch die Verarbeitungseinheit initiiert wird, eine vorliegende Meldung an die Verarbeitungseinheit signalisieren können. Der Erfindung liegt weiter die Aufgabe zugrunde, ein Busprotokoll anzugeben, das eine derartige Kommunikation zwischen den Peripheriemodulen und der Verarbeitungseinheit auf dem Systembus ermöglicht. Der Erfindung liegt ferner die Aufgabe zugrunde, ein Peripheriemodul, eine Verarbeitungseinheit und einen Hub sowie ein aus diesen Komponenten bestehendes System anzugeben, wobei die Komponenten Mittel zur Signalisierung einer bei den Peripheriemodulen vorliegenden Meldung an die Verarbeitungseinheit unabhängig von dem Telegrammverkehr, der durch die Verarbeitungseinheit initiiert wird, aufweisen.

Diese Aufgabe wird bei einem Verfahren der eingangs genannten Art dadurch gelöst, dass ein Peripheriemodul, das der Verarbeitungseinheit ein Ereignis signalisieren möchte, an die Verarbeitungseinheit in einer Telegrammpause anstelle des Standard-Idle-Zeichens eine Signalisierungssequenz sendet, die aus einem Alarm-Idle-Zeichen und einem Alarm-Identifier besteht, der Informationen über das betreffende Ereignis sowie die Modul-Adresse des Peripheriemoduls, auf dem das Ereignis vorliegt, enthält, wobei die Informationen über das Ereignis ebenfalls in den größeren Zeichenraum umkodiert werden.

Die Aufgabe wird weiter durch ein Busprotokoll, einem Peripheriemodul, einer Verarbeitungseinheit, einem Hub und einem System der eingangs genannten Art mit den jeweils in den Ansprüchen 9, 12, 18, 23 bzw. 26 genannten Merkmalen gelöst.

Über die Signalisierungssequenz erhält die Verarbeitungseinheit die Information, dass von einem bestimmten Peripheriemodul eine Meldung vorliegt, die von der Verarbeitungseinheit abgeholt werden soll. Dadurch, dass das betreffende Peripheriemodul in den Telegrammpausen anstelle des Standard-Idle-Zeichens ein Alarm-Idle-Zeichen, gefolgt von weiteren Informationen im Alarm-Identifier, versenden, wird der Telegrammverkehr (Request/Response-Telegramme) funktional und zeitlich durch die Signalisierungssequenz praktisch nicht beeinflusst. Dies entlastet den Systembus-Master von Koordinierungsaufgaben. Die Verarbeitungseinheit kann anhand der Signalisierungssequenzen die unterschiedlichsten Informationen ermitteln. Z.B. erkennt die Verarbeitungseinheit sofort, von welchem Peripheriemodul welche Meldung anliegt. Des Weiteren kann mit diesem Mechanismus auf eine oder mehrere zusätzliche Hardware-Leitungen für die Signalisierung von Meldungen von den Peripheriemodulen an die Verarbeitungseinheit verzichtet werden.

In einer vorteilhaften Ausführungsform wird die Signalisierungssequenz an einer beliebigen Stelle in der Zeichenkette unterbrochen, wenn ein Request- oder ein Response-Telegramm gesendet wird. Dies stellt sicher, dass die normale Datenübertragung nicht beeinflusst wird. Darüber hinaus kann durch diesen Mechanismus für die erste Signalisierungssequenz, die z.B. einen Prozess-Alarm anzeigt, eine berechenbare, deterministische Reaktionszeit angegeben werden. Diese setzt sich aus der reinen Durchleitezeit der Signalisierungssequenz und einer möglichen Latenzzeit, falls ein maximal langes Telegramm vor der Signalisierungssequenz übertragen werden muss, zusammen.

In einer weiteren vorteilhaften Ausführungsform wird die Verarbeitungseinheit als Systembus-Master verwendet, wodurch auf ein zusätzliches Interface-Modul verzichtet werden kann.

In einer weiteren vorteilhaften Ausführungsform wird alternativ ein Interface-Modul als Systembus-Master verwendet, das eine Kopplung zwischen den Peripheriemodulen und der Verarbeitungseinheit über einen Feldbus herstellt, wodurch eine Entlastung der Verarbeitungseinheit erzielt wird.

In einer weiteren vorteilhaften Ausführungsform wird die Signalisierungssequenz solange vom Peripheriemodul gesendet, bis die Verarbeitungseinheit durch entsprechende Telegramme dem Peripheriemodul signalisiert, dass die Signalisierungssequenz bei der Verarbeitungseinheit angekommen ist, wodurch ein Höchstmaß an Sicherheit erreicht wird.

In weiteren vorteilhaften Ausführungsformen sind die Verarbeitungseinheit und die Peripheriemodule in einem Daisy-Chain- oder einem Backplane-Aufbau miteinander verschaltet. Dies sind die üblichen Grundaufbauformen eines Systembusses, die mit der Erfindung problemlos realisierbar sind.

In einer weiteren vorteilhaften Ausführungsform ist das Verfahren zur Ereignissignalisierung im Bereich der Automatisierungstechnik vorgesehen, wobei die Verarbeitungseinheit als speicherprogrammierbare Steuerung ausgebildet ist. Insbesondere in der Automatisierungstechnik besteht die Anforderung, dass die Peripheriemodule anstehende Alarme bzw. Kommunikationsanforderungen schnell an den Systembus-Master melden können, da die Peripheriemodule die Verbindung zum Automatisierungsprozess herstellen.

In einer weiteren vorteilhaften Ausführungsform weist das Peripheriemodul eine Sample-Stufe zur Speicherung einer zu sendenden Signalisierungssequenz auf. Da nur eine Signalisierungssequenz gleichzeitig gesendet werden kann, muss von möglicherweise mehreren vorliegenden Ereignissen nach festzulegenden Regeln das als erste zu meldende Ereignis bestimmt werden, wobei die resultierende Signalisierungssequenz in der Sample-Stufe festgehalten wird.

In einer weiteren vorteilhaften Ausführungsform weist das Peripheriemodul zumindest einen weiteren Sender und zumindest einen weiteren Empfänger zum Anschluss weiterer Peripheriemodule auf. Hierdurch wird eine Verschaltung nach dem Daisy-Chain-Aufbau ermöglicht, in dem die Verarbeitungseinheit und die Peripheriemodule in Serie miteinander verbunden sind. Bei einer solchen Verkettung muss dabei die Verarbeitungseinheit nicht zwingend an einem Ende der Reihe, sondern sie kann auch inmitten der Reihe vorliegen.

In einer weiteren vorteilhaften Ausführungsform weist dabei das Peripheriemodul eine Hold-Stufe zur Speicherung von Signalisierungssequenzen von weiteren Peripheriemodulen auf. Bei möglicherweise zugleich vorliegenden eigenen Signalisierungssequenzen kann so nach festzulegenden Regeln das als erste zu meldende Ereignis bestimmt werden, dessen Signalisierungssequenz dann der Sample-Stufe zugeführt wird.

In einer weiteren vorteilhaften Ausführungsform weist dabei das Peripheriemodul eine Prioritäts-Stufe zur Bewertung sowohl der eigenen Signalisierungssequenzen als auch der von weiteren Peripheriemodulen und Weiterleitung der Signalisierungssequenz mit der höchsten Priorität auf. Die so priorisierten Signalisierungssequenzen weisen in ihrem Alarm-Identifier ein Feld für die zugewiesene Priorität auf, so dass die Wichtigkeit des entsprechenden Ereignisses direkt aus der Signalisierungssequenz abgelesen werden kann.

In einer weiteren vorteilhaften Ausführungsform ist durch die Prioritäts-Stufe bei Vorliegen von Signalisierungssequenzen gleicher Priorität eine durch ein auf dem Systembus geltendes Prioritätsschema festgelegte Signalisierungssequenz weiterleitbar, wodurch mögliche Konflikte vermieden werden.

In einer weiteren vorteilhaften Ausführungsform weist die Verarbeitungseinheit zumindest einen weiteren Sender und zumindest einen weiteren Empfänger zum Anschluss weiterer Peripheriemodule auf. Somit kann die Verarbeitungseinheit auch in einem Daisy-Chain-Aufbau zwischen zwei Peripheriemodule oder in einem Backplane-Aufbau ohne zusätzlichen Hub verschaltet werden.

In einer weiteren vorteilhaften Ausführungsform weist die Verarbeitungseinheit pro Empfänger eine Hold-Stufe zur Speicherung von Signalisierungssequenzen der Peripheriemodule auf. Bei möglicherweise zugleich vorliegenden Signalisierungssequenzen kann so nach festzulegenden Regeln das als erste zu bearbeitende Ereignis bestimmt werden.

In einer weiteren vorteilhaften Ausführungsform weist die Verarbeitungseinheit bei mehr als einer Hold-Stufe eine Prioritäts-Stufe zur Bewertung der Signalisierungssequenzen von den Peripheriemodulen und Verarbeitung der Signalisierungssequenz mit der höchsten Priorität auf.

In weiteren vorteilhaften Ausführungsformen weist auch der Hub eine Sample- und/oder Hold-Stufe zur Speicherung der zu sendenden und/oder empfangenen Signalisierungssequenzen auf.

Im Folgenden wird die Erfindung anhand der in den Figuren dargestellten Ausführungsbeispiele näher beschrieben und erläutert. Es zeigen:
- FIG 1: ein Ablaufdiagramm einer Kommunikation zwischen einer Verarbeitungseinheit und einem Peripheriemodul,
- FIG 2: den Aufbau der erfindungsgemäßen Signalisierungssequenz,
- FIG 3: eine Ausführungsform des erfindungsgemäßen Systems in einem Daisy-Chain-Aufbau,
- FIG 4: eine Ausführungsform des erfindungsgemäßen Systems in einem Backplane-Aufbau,
- FIG 5: eine Ausführungsform des erfindungsgemäßen Systems in einem Aufbau mit zwei Hubs.

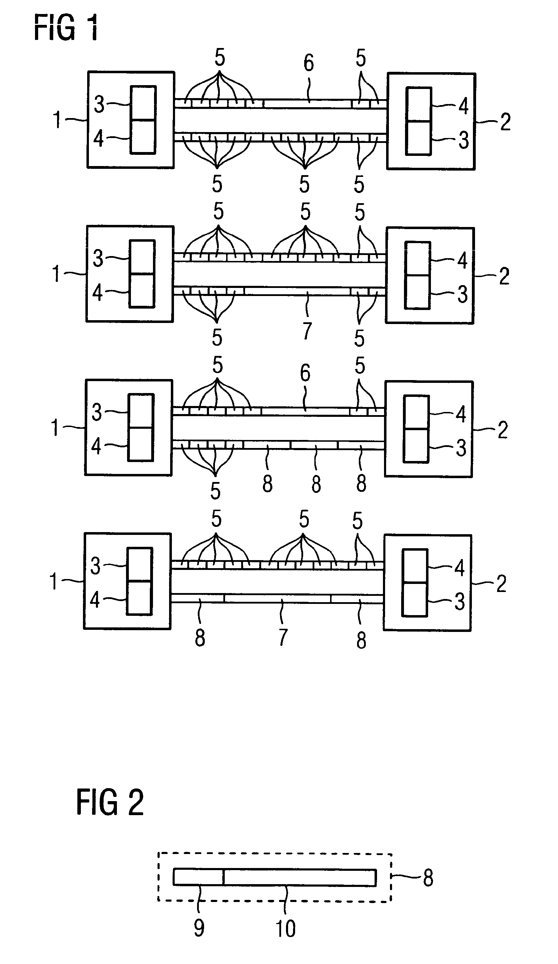

FIG 1 zeigt ein Ablaufdiagramm einer Kommunikation zwischen einer Verarbeitungseinheit 1 und einem Peripheriemodul 2. Die Übertragung zwischen diesen zwei Baugruppen 1, 2 erfolgt über Punkt-zu-Punkt-Verbindungen zwischen den Kommunikationsports 3, 4. Für jede Übertragungsrichtung gibt es einen eigenen Übertragungskanal. Die Übertragung zwischen einem Sender 3 und einem Empfänger 4 kann dabei z.B. auf LVDS (Low Voltage Differential Signaling) basieren. Dies ist ein differentieller Schnittstellen-Standard für Hochgeschwindigkeits-Datenübertragung (ANSI/TIA/EIA-644-1995, IEEE 1596.3-1996). Die Leitungspaare zwischen zwei Ports sind unidirektional.

Ferner werden die einzelnen Zeichen, aus denen sich die zu übertragenen Daten zusammensetzen, in einen größeren Zeichenraum umkodiert. Dies kann beispielsweise mit einer 8B/10B-Kodierung geschehen, d.h. ein 8-Bit-Zeichen wird beim Sender 3 durch einen Kodierer in ein 10-Bit-Zeichen umgewandelt und beim Empfänger 4 durch einen Dekodierer wieder in ein 8-Bit-Zeichen. Somit bleibt ein nicht genutzter Zeichenvorrat übrig, aus dem bestimmte Zeichen aufgrund ihres "Sicherheitsabstandes" herausragen. Unter diesen Zeichen gibt es eine Klasse von Zeichen, so genannte Komma-Zeichen, die selbst bei jeder beliebigen Kombination aus diesen Zeichen und allen anderen Zeichen keine Kommas über Zeichengrenzen hinweg erzeugen. Diese Zeichen eignen sich deshalb hervorragend, um die Zeichengrenzen innerhalb des Datenstroms zu ermitteln. Eines davon, das Standard-Idle-Zeichen 5, wird in den Telegrammpausen zwischen den Ports 3, 4 zweier Baugruppen übertragen. Damit ist die Übertragungsstrecke auch in den Telegrammpausen synchronisiert.

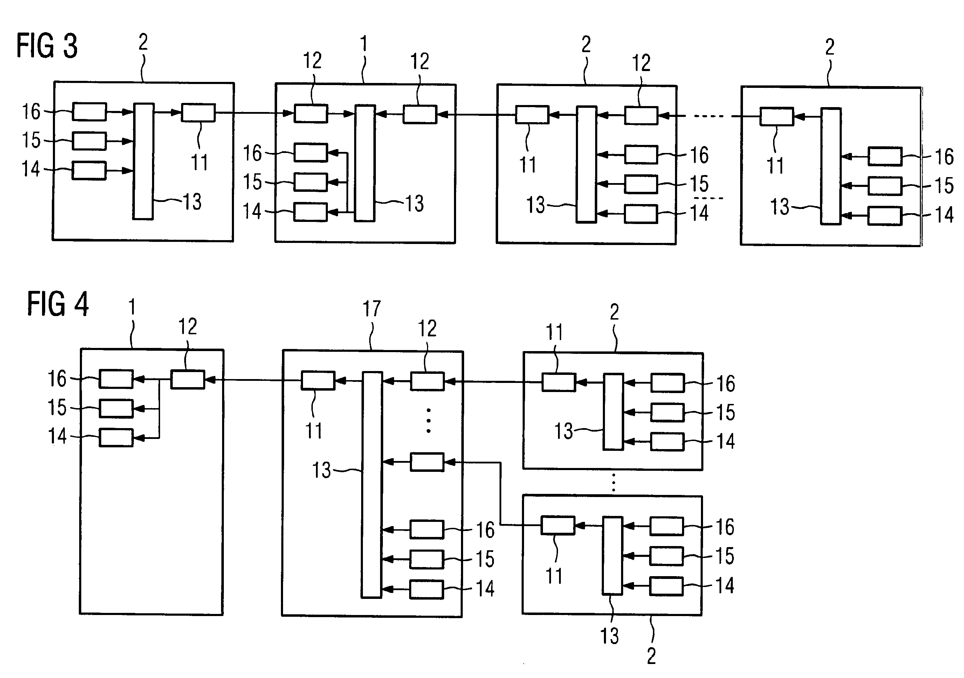

Die normale Kommunikation läuft nun so ab, dass die Verarbeitungseinheit 1 ein Request-Telegramm 6 an das Peripheriemodul 2 sendet (oberes Bild in der Figur) und vom Peripheriemodul 2 ein Response-Telegramm 7 zurückerhält (zweites Bild von oben). Liegt nun in dem Peripheriemodul 2 ein Ereignis vor, das dieses an die Verarbeitungseinheit 1 melden möchte, so schickt es anstelle des Standard-Idle-Zeichens 5 eine Signalisierungssequenz 8, die solange wiederholt wird, bis die Verarbeitungseinheit 1 dem Peripheriemodul 2 durch entsprechende Telegramme signalisiert, dass die Meldung bei der Verarbeitungseinheit 1 angekommen ist. Währenddessen kann die Verarbeitungseinheit 1 auch einen weiteren Request 6 an das Peripheriemodul 2 schicken (zweites Bild von unten). Dabei kann das Peripheriemodul 2 den Response 7 auf den Request 6 der Verarbeitungseinheit 1 sofort zurücksenden, da die Signalisierungssequenz 8 an jeder Zeichengrenze unterbrochen werden kann. Dies stellt sicher, dass die normale Datenübertragung nicht beeinflusst wird (unteres Bild in der Figur). Durch diesen Mechanismus kann für die erste Ereignismeldung 8 auch eine "worst-case"-Zeit angegeben werden, die nur durch die Durchleitezeit der Signalisierungssequenz 8 durch die Module 2 (im Falles eines Daisy-Chain-Aufbaus, s. Figur 3) und durch die Laufzeit eines maximal langen Telegrammes bestimmt wird.

FIG 2 zeigt den Aufbau der Signalisierungssequenz 8. Diese besteht aus einem Alarm-Idle-Zeichen 9 und einem Alarm-Identifier 10. Dabei handelt es sich bei dem Alarm-Idle-Zeichen 9 um ein weiteres Zeichen aus der Gruppe der Komma-Zeichen, während der Alarm-Identifier 10 weitere Informationen über die betreffende Meldung wie beispielsweise die Modul-Adresse des betreffenden Peripheriemoduls 2, eine Priorität der Ereignismeldung 8 und welche Meldung/Information auf dem Peripheriemodul 2 vorliegt, liefert.

FIG 3 zeigt eine Ausführungsform des erfindungsgemäßen Systems in einem Daisy-Chain-Aufbau. Dabei weist das System im in der Figur gezeigten Beispiel ein Peripheriemodul 2 links von der Verarbeitungseinheit 1 und weitere Peripheriemodule 2 rechts von der Verarbeitungseinheit 1 auf. In jedem Peripheriemodul 2 können, in diesem Beispiel, drei verschiedene Alarm-Meldungen 14-16 vorliegen. Diese werden einer Prioritäts-Stufe 13 zugeführt, die die Signalisierungssequenzen 8 bewertet und die Signalisierungssequenz 8 mit der höchsten Priorität weiterleitet. Liegen zwei Signalisierungssequenzen 8 mit der gleichen Priorität vor, so gilt ein auf dem Systembus festgelegtes Prioritätsschema, dass in diesem Fall festlegt, welche Signalisierungssequenz 8 weitergeleitet wird. Die resultierende Signalisierungssequenz 8, die von dem Peripheriemodul 2 weitergeleitet wird, sei es an ein Nachbarmodul 2 oder an die Verarbeitungseinheit, wird in den jeweiligen Peripheriemodulen 2 in einer Sample-Stufe 11 festgehalten. Hierfür weisen die Nachbarmodule 2 und die Verarbeitungseinheit 1 eine Hold-Stufe 12 auf, die die ankommenden Signalisierungssequenzen 8 empfängt. Im Falle, dass die Signalisierungssequenzen 8 an ein Nachbarmodul 2 weitergeleitet werden, wird das in der Hold-Stufe 12 zusammen mit den eigenen möglichen Alarm-Meldungen 14-16 der Prioritäts-Stufe 13 zur Bewertung zugeführt. Die Verarbeitungseinheit 1 weist im gezeigten Beispiel zwei Hold-Stufen 12 auf, in denen die einlaufenden Signalisierungssequenzen 8 gespeichert und von hier der Prioritäts-Stufe 13 zugeführt werden, die entscheidet, welche der möglichen Alarm-Meldungen 14-16 zuerst bearbeitet wird.

FIG 4 zeigt eine Ausführungsform des erfindungsgemäßen Systems in einem Backplane-Aufbau. Dabei weist das System neben der Verarbeitungseinheit 1 links im Bild und den Peripheriemodulen 2 rechts noch einen Hub 17 auf, durch den die Verbindung zwischen den Peripheriemodulen 2 und der Verarbeitungseinheit 1 hergestellt wird. Aufbau und Funktionsweise der Peripheriemodule 2 ist wie bei den äußeren Peripheriemodulen 2 im Daisy-Chain-Aufbau in Figur 3 beschrieben. Die von den Peripheriemodulen 2 gesendeten Signalisierungssequenzen 8 werden im Hub 17 in jeweils einer Hold-Stufe 12 gespeichert, d.h. der Hub 17 weist für jedes Peripheriemodul 2 bzw. für jeden Modul-Steckplatz auf der Backplane eine Hold-Stufe 12 auf. Diese Signalisierungssequenzen 8 werden nun mit möglicherweise eigenen Alarm-Meldungen 14-16 des Hub 17 an die Prioritäts-Stufe 13 des Hubs 17 zur Priorisierung weitergeleitet. Die resultierende Signalisierungssequenz 8, die an die Verarbeitungseinheit 1 gesendet wird, wird wieder in einer Sample-Stufe 11 des Hubs gespeichert. Somit kommt in der Verarbeitungseinheit 1 nur noch eine Signalisierungssequenz 8 an, so dass die Verarbeitungseinheit 1, im Gegensatz zu der im Daisy-Chain-Aufbau beschriebenen, nur eine Hold-Stufe 12 aufweist und also auch keine Prioritäts-Stufe 13 benötigt.

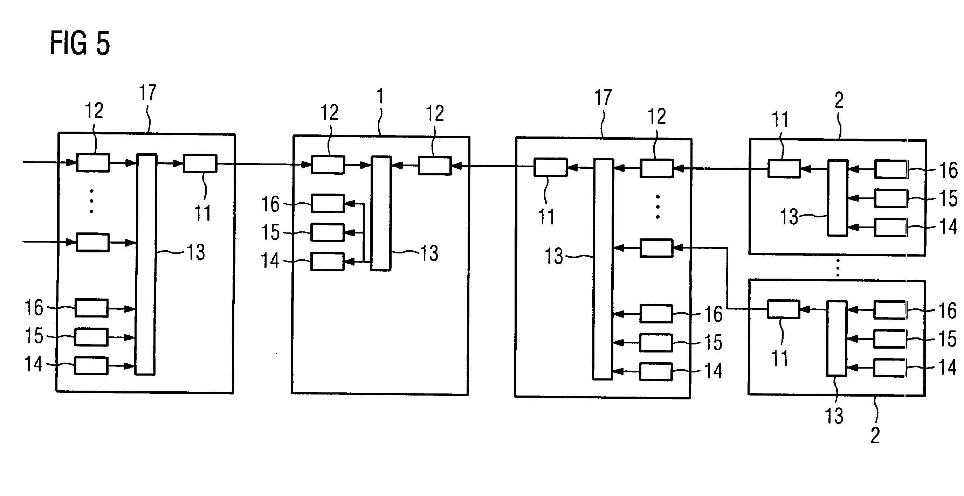

FIG 5 zeigt eine Ausführungsform des erfindungsgemäßen Systems in einem Aufbau mit zwei Hubs 17. Dabei entspricht der Aufbau im Wesentlichen dem aus Figur 4, wobei sich links von der Verarbeitungseinheit 1 noch ein zusätzlicher Hub 17 befindet. In der Figur 5 nicht dargestellt sind die weiteren Peripheriemodule 2, die an diesen zusätzlichen Hub 17 angeschlossen werden können. Im Unterschied zu der Verarbeitungseinheit 1 aus Figur 4 benötigt die Verarbeitungseinheit 1 bei dem Aufbau in dieser Figur 5 zwei Hold-Stufen 12, in denen die von den beiden Hubs 17 gesendeten Signalisierungssequenzen 8 gespeichert werden. Daraus folgt, dass die Verarbeitungseinheit 1 bei dem Aufbau mit zwei Hubs 17 auch eine Prioritäts-Stufe 13 zur Priorisierung der eingehenden Signalisierungssequenzen 8 benötigt. Für eine Erläuterung der weiteren Bezugszeichen wird auf die Ausführungen zu den vorhergehenden Figuren verwiesen.

Zusammenfassend betrifft die Erfindung ein Verfahren, ein Busprotokoll, ein Peripheriemodul, eine Verarbeitungseinheit, einen Hub sowie ein System aus den genannten Komponenten zur Ereignissignalisierung zwischen zumindest einem Peripheriemodul und einer Verarbeitungseinheit mittels eines Systembusses. Hierbei werden die zu übertragenen Daten in einen größeren Zeichenraum kodiert, aus dem ein Standard-Idle-Zeichen in Telegrammpausen zur Synchronisierung einer Verbindung zwischen Sender und Empfänger verwendet wird. Der Erfindung liegt die Aufgabe zugrunde, eine bei den Peripheriemodulen vorliegende Meldung unabhängig vom Telegrammverkehr, der durch die Verarbeitungseinheit initiiert wird, an die Verarbeitungseinheit signalisieren zu können. Diese Aufgabe wird dadurch gelöst, dass ein Peripheriemodul, das der Verarbeitungseinheit ein Ereignis signalisieren möchte, an die Verarbeitungseinheit in einer Telegrammpause anstelle des Standard-Idle-Zeichens eine Signalisierungssequenz sendet, die aus einem Alarm-Idle-Zeichen und einem Alarm-Identifier besteht, der Informationen über das betreffende Ereignis sowie die Modul-Adresse des Peripheriemoduls, auf dem das Ereignis vorliegt, enthält, wobei die Informationen über das Ereignis ebenfalls in den größeren Zeichenraum umkodiert werden.

## Patentansprüche

1. Verfahren zur Ereignissignalisierung zwischen zumindest einem Peripheriemodul (2) und einer Verarbeitungseinheit (1) mittels eines Systembusses, wobei der Systembus von einem Systembus-Master betrieben wird, der von den Peripheriemodulen (2) Daten lesen oder an diese senden kann, wobei sich die Daten aus einzelnen Zeichen zusammensetzen, die zur Übertragung in einer Bitübertragungsschicht bei einem Sender (3) durch einen Kodierer in einen größeren Zeichenraum umkodiert und bei einem Empfänger (4) durch einen Dekodierer wieder zurückgewandelt werden, wobei für die Datenübertragung ein Telegrammverfahren nach dem Request/Response-Paradigma verwendet wird, bei dem bestimmte Zeichen aus dem größeren Zeichenraum zur Kennzeichnung von Start und Ende eines Telegramms und ein Standard-Idle-Zeichen (5) in Telegrammpausen zur Synchronisierung einer Verbindung zwischen dem Sender (3) und dem Empfänger (4) verwendet werden,
**dadurch gekennzeichnet,**
**dass** ein Peripheriemodul (2), das der Verarbeitungseinheit (1) ein Ereignis signalisieren möchte, an die Verarbeitungseinheit (1) in einer Telegrammpause anstelle des Standard-Idle-Zeichens (5) eine Signalisierungssequenz (8) sendet, die aus einem Alarm-Idle-Zeichen (9) und einem Alarm-Identifier (10) besteht, der Informationen über das betreffende Ereignis sowie die Modul-Adresse des Peripheriemoduls (2), auf dem das Ereignis vorliegt, enthält, wobei die Informationen über das Ereignis ebenfalls in den größeren Zeichenraum umkodiert werden.

2. Verfahren nach Anspruch 1,
wobei die Signalisierungssequenz (8) an einer beliebigen Stelle in der Zeichenkette unterbrochen wird, wenn ein Request- (6) oder ein Response-Telegramm (7) gesendet wird.

3. Verfahren nach Anspruch 1 oder 2,
wobei die Verarbeitungseinheit (1) als Systembus-Master verwendet wird.

4. Verfahren nach Anspruch 1 oder 2,
wobei ein Interface-Modul als Systembus-Master verwendet wird, das eine Kopplung zwischen den Peripheriemodulen (2) und der Verarbeitungseinheit (1) über einen Feldbusherstellt.

5. Verfahren nach einem der vorhergehenden Ansprüche,
wobei die Signalisierungssequenz (8) solange vom Peripheriemodul (2) gesendet wird, bis die Verarbeitungseinheit (1) durch entsprechende Telegramme dem Peripheriemodul (2) signalisiert, dass die Signalisierungssequenz (8) bei der Verarbeitungseinheit (1) angekommen ist.

6. Verfahren nach einem der vorhergehenden Ansprüche,
wobei die Verarbeitungseinheit (1) und die Peripheriemodule (2) in einem Daisy-Chain-Aufbau miteinander verschaltet sind.

7. Verfahren nach einem der Ansprüche 1 bis 5,
wobei die Verarbeitungseinheit (1) und die Peripheriemodule (2) in einem Backplane-Aufbau miteinander verschaltet sind.

8. Verfahren nach einem der vorhergehenden Ansprüche,
wobei das Verfahren zur Ereignissignalisierung im Bereich der Automatisierungstechnik vorgesehen ist, wobei die Verarbeitungseinheit (1) als speicherprogrammierbare Steuerung ausgebildet ist.

9. Busprotokoll zur Ereignissignalisierung zwischen zumindest einem Peripheriemodul (2) und einer Verarbeitungseinheit (1) auf einem Systembus, wobei der Systembus von einem Systembus-Master betrieben wird, der von den Peripheriemodulen (2) Daten lesen oder an diese senden kann, wobei sich die Daten aus einzelnen Zeichen zusammensetzen, die zur Übertragung in einer Bitübertragungsschicht bei einem Sender (3) durch einen Kodierer in einen größeren Zeichenraum umkodiert und bei einem Empfänger (4) durch einen Dekodierer wieder zurückgewandelt werden, wobei für die Datenübertragung ein Telegrammverfahren nach dem Request/Response-Paradigma verwendet wird, bei dem bestimmte Zeichen aus dem größeren Zeichenraum zur Kennzeichnung von Start und Ende eines Telegramms und ein Standard-Idle-Zeichen (5) in Telegrammpausen zur Synchronisierung einer Verbindung zwischen dem Sender (3) und dem Empfänger (4) verwendet werden,
**dadurch gekennzeichnet,**
**dass** in einer Telegrammpause anstelle des Standard-Idle-Zeichens (5) eine Signalisierungssequenz (8), die aus einem Alarm-Idle-Zeichen (9) und einem Alarm-Identifier (10) besteht, der Informationen über das betreffende Ereignis sowie die Modul-Adresse des Peripheriemoduls (2), auf dem das Ereignis vorliegt, enthält, wobei die Informationen über das Ereignis ebenfalls in den größeren Zeichenraum umkodiert werden, von einem Peripheriemodul (2), das der Verarbeitungseinheit (1) ein Ereignis signalisieren möchte, an die Verarbeitungseinheit (1) sendbar ist.

10. Busprotokoll nach Anspruch 9,
wobei die Signalisierungssequenz (8) an einer beliebigen Zeichenkette unterbrechbar ist, wenn ein Request- (6) oder ein Response-Telegramm (7) gesendet wird.

11. Busprotokoll nach Anspruch 9 oder 10,
wobei die Signalisierungssequenz (8) solange vom Peripheriemodul (2) gesendet wird, bis die Verarbeitungseinheit (1) durch entsprechende Telegramme dem Peripheriemodul (2) signalisiert, dass die Signalisierungssequenz (8) bei der Verarbeitungseinheit (1) angekommen ist.

12. Peripheriemodul (2) zur Kommunikation mit einer Verarbeitungseinheit (1) über einen Systembus, wobei das Peripheriemodul (2) einen Sender (3) und einen Empfänger (4) zum Senden oder Empfangen von Daten an oder von einem Systembus-Master aufweist, wobei sich die Daten aus einzelnen Zeichen zusammensetzen, die zur Übertragung in einer Bitübertragungs-schicht beim Sender (3) durch einen Kodierer in einen größeren Zeichenraum umkodierbar und beim Empfänger (4) durch einen Dekodierer wieder zurückwandelbar sind, wobei für die Datenübertragung ein Telegrammverfahren nach dem Request/Response-Paradigma verwendbar ist, bei dem bestimmte Zeichen aus dem größeren Zeichenraum zur Kennzeichnung von Start und Ende eines Telegramms und ein Standard-Idle-Zeichen (5) in Telegrammpausen zur Synchronisierung einer Verbindung zwischen dem Sender (3) und dem Empfänger (4) verwendbar sind,
**dadurch gekennzeichnet,**
**dass** das Peripheriemodul (2) zur Ereignissignalisierung Mittel zum Senden einer Signalisierungssequenz (8) anstelle des Standard-Idle-Zeichens (5) an die Verarbeitungseinheit (1) aufweist, die aus einem Alarm-Idle-Zeichen (9) und einem Alarm-Identifier (10) besteht, der Informationen über das betreffende Ereignis sowie die Modul-Adresse des Peripheriemoduls (2) enthält, wobei die Informationen über das Ereignis ebenfalls in den größeren Zeichenraum umkodierbar sind.

13. Peripheriemodul (2) nach Anspruch 12,
wobei das Peripheriemodul (2) eine Sample-Stufe (11) zur Speicherung einer zu sendenden Signalisierungssequenz (8) aufweist.

14. Peripheriemodul (2) nach Anspruch 12 oder 13,
wobei das Peripheriemodul (2) zumindest einen weiteren Sender (3) und zumindest einen weiteren Empfänger (4) zum Anschluss weiterer Peripheriemodule (2) aufweist.

15. Peripheriemodul (2) nach Anspruch 14,
wobei das Peripheriemodul (2) eine Hold-Stufe (12) zur Speicherung von Signalisierungssequenzen (8) von weiteren Peripheriemodulen (2) aufweist.

16. Peripheriemodul (2) nach Anspruch 15,
wobei das Peripheriemodul (2) eine Prioritäts-Stufe (13) zur Bewertung sowohl der eigenen Signalisierungssequenz (8) als auch der von weiteren Peripheriemodulen (2) und Weiterleitung der Signalisierungssequenz (8) mit der höchsten Priorität aufweist.

17. Peripheriemodul (2) nach Anspruch 16,
wobei durch die Prioritäts-Stufe (13) bei Vorliegen von Signalisierungssequenzen (8) gleicher Priorität eine durch ein auf dem Systembus geltendes Prioritätsschema festgelegte Signalisierungssequenz (8) weiterleitbar ist.

18. Verarbeitungseinheit (1) zur Kommunikation mit zumindest einem Peripheriemodul (2) über einen Systembus, wobei die Verarbeitungseinheit (1) einen Sender (3) und einen Empfänger (4) zum Senden oder Empfangen von Daten an oder von den Peripheriemodulen (2) aufweist, wobei sich die Daten aus einzelnen Zeichen zusammensetzen, die zur Übertragung in einer Bitübertragungsschicht beim Sender (3) durch einen Kodierer in einen größeren Zeichenraum umkodierbar und beim Empfänger (4) durch einen Dekodierer wieder zurückwandelbar sind, wobei für die Datenübertragung ein Telegrammverfahren nach dem Request/Response-Paradigma verwendbar ist, bei dem bestimmte Zeichen aus dem größeren Zeichenraum zur Kennzeichnung von Start und Ende eines Telegramms und ein Standard-Idle-Zeichen (5) in Telegrammpausen zur Synchronisierung einer Verbindung zwischen dem Sender (3) und dem Empfänger (4) verwendbar
sind,
**dadurch gekennzeichnet,**
**dass** die Verarbeitungseinheit (1) Mittel zum Empfangen einer Signalisierungssequenz (8) anstelle des Standard-Idle-Zeichens (5) von den Peripheriemodulen (2) aufweist, die aus einem Alarm-Idle-Zeichen (9) und einem Alarm-Identifier (10) besteht, der Informationen über das betreffende Ereignis sowie die Modul-Adresse des Peripheriemoduls (2), auf dem das Ereignis vorliegt, enthält, wobei die Informationen über das Ereignis ebenfalls in den größeren Zeichenraum umkodierbar sind.

19. Verarbeitungseinheit (1) nach Anspruch 18,
wobei die Verarbeitungseinheit (1) als Systembus-Master ausgebildet ist.

20. Verarbeitungseinheit (1) nach Anspruch 18 oder 19,
wobei die Verarbeitungseinheit (1) zumindest einen weiteren Sender (3) und zumindest einen weiteren Empfänger (4) zum Anschluss weiterer Peripheriemodule (2) aufweist.

21. Verarbeitungseinheit (1) nach einem der Ansprüche 18 bis 20,
wobei die Verarbeitungseinheit (1) pro Empfänger (4) eine Hold-Stufe (12) zur Speicherung von Signalisierungssequenzen (8) der Peripheriemodule (2) aufweist.

22. Verarbeitungseinheit (1) nach Anspruch 21,
wobei die Verarbeitungseinheit (1) bei mehr als einer Hold-Stufe (12) eine Prioritäts-Stufe (13) zur Bewertung der Signalisierungssequenzen (8) von den Peripheriemodulen (2) und Verarbeitung der Signalisierungssequenz (8) mit der höchsten Priorität aufweist.

23. Hub (17) zur Verbindung von zumindest einem Peripheriemodul (2) mit einer Verarbeitungseinheit (1) mittels eines Systembusses, wobei der Hub (17) einen Sender (3) und einen Empfänger (4) zum Senden oder Empfangen von Daten an oder von einem Systembus-Master sowie je anschließbarem Peripheriemodul (2) einen Sender (3) und einen Empfänger (4) zum Senden oder Empfangen von Daten an oder von den Peripheriemodulen (2) aufweist, wobei sich die Daten aus einzelnen Zeichen zusammensetzen, die zur Übertragung in einer Bitübertragungsschicht beim Sender (3) durch einen Kodierer in einen größeren Zeichenraum umkodierbar und beim Empfänger (4) durch einen Dekodierer wieder zurückwandelbar sind, wobei für die Datenübertragung ein Telegrammverfahren nach dem Request/Response-Paradigma verwendbar ist, bei dem bestimmte Zeichen aus dem größeren Zeichenraum zur Kennzeichnung von Start und Ende eines Telegramms und ein Standard-Idle-Zeichen (5) in Telegrammpausen zur Synchronisierung einer Verbindung zwischen dem Sender (3) und dem Empfänger (4) verwendbar sind,
**dadurch gekennzeichnet,**
**dass** der Hub (17) Mittel zum Empfangen einer Signalisierungssequenz (8) anstelle des Standard-Idle-Zeichens (5) von den Peripheriemodulen (2) und Mittel zum Senden einer Signalisierungssequenz (8) anstelle des Standard-Idle-Zeichens (5) an die Verarbeitungseinheit (1) aufweist, die aus einem Alarm-Idle-Zeichen (9) und einem Alarm-Identifier (10) besteht, der Informationen über das betreffende Ereignis sowie die Modul-Adresse des Peripheriemoduls (2), auf dem das Ereignis vorliegt, enthält, wobei die Informationen über das Ereignis ebenfalls in den größeren Zeichenraum umkodierbar sind, und dass der Hub (17) eine Prioritäts-Stufe (13) zur Bewertung sowohl der eigenen Signalisierungssequenz (8) als auch der von weiteren Peripheriemodulen (2) und Weiterleitung der Signalisierungssequenz (8) mit der höchsten Priorität aufweist.

24. Hub (17) nach Anspruch 23,
wobei der Hub (17) eine Sample-Stufe (11) zur Speicherung einer zu sendenden Signalisierungssequenz (8) aufweist.

25. Hub (17) nach Anspruch 23 oder 24,
wobei der Hub (17) je anschließbarem Peripheriemodul (2) eine Hold-Stufe (12) zur Speicherung von Signalisierungssequenzen (8) von Peripheriemodulen (2) aufweist.

26. System zur Ereignissignalisierung zwischen Peripheriemodulen (2) und einer Verarbeitungseinheit (1) mittels eines Systembusses,
wobei das System eine Verarbeitungseinheit (1) nach einem der Ansprüche 18 bis 22 und zumindest ein Peripheriemodul (2) nach einem der Ansprüche 12 bis 17 aufweist.

27. System nach Anspruch 26,
wobei die Verarbeitungseinheit (1) und die Peripheriemodule (2) eine Verschaltung nach einem Daisy-Chain-Aufbau aufweisen.

28. System nach Anspruch 26,
wobei das System zumindest einen Hub (17) nach einem der Ansprüche 23 bis 25 aufweist.

29. System nach Anspruch 28,
wobei die Verarbeitungseinheit (1) und die Peripheriemodule (2) eine Verschaltung nach einem Backplane-Aufbau aufweisen.

30. System nach einem der Ansprüche 26 bis 29,
wobei das System zur Ereignissignalisierung im Bereich der Automatisierungstechnik vorgesehen ist, wobei die Verarbeitungseinheit (1) als speicherprogrammierbare Steuerung ausgebildet ist.
